# EUROPEAN PATENT APPLICATION

(11) **EP 1 848 173 A1**
(43) Date of publication of application: **24.10.2007**
(21) Application number: 06008318.5
(22) Date of filing: 21.04.2006
(51) Int. Cl.: H04L 29/06

(54) **Assignment of policy function address during access authentication in WiMAX networks**

(71) Applicant: SIEMENS AKTIENGESELLSCHAFT, 80333 München (DE)
(72) Inventor: Premec, Domagoj, 10010 Zagreb (HR)

(57) **Abstract**

Dynamically specifying a policy function (PF) used by a Service Flow Authorization (SFA) of an Internet Protocol (IP) network. A mobile station (MS) sends a request to a Network Access Server (NAS) (201). Service Equipment forwards the request to a Service Provider's AAA Server (202). A connectivity serving network (CSN) sends an Access-Accept RADIUS message to an access serving network (ASN) (203). The PF address is inserted into the Access-Accept RADIUS message.

## Description

### Technical Field

The invention relates to IP networks and, more specifically, to a WiMAX network and ensuring a PF address is provided for the SFA.

IPv6 (Internet Protocol Version 6) is the latest level of the Internet Protocol (IP) and is now included as part of IP support in many products including the major computer operating systems. IPv6 has also been called "IPng" (IP Next Generation). Formally, IPv6 is a set of specifications from the Internet Engineering Task Force (IETF). IPv6 was designed as an evolutionary set of improvements to the current IP Version 4. Network hosts and intermediate nodes with either IPv4 or IPv6 can handle packets formatted for either level of the Internet Protocol. Users and service providers can update to IPv6 independently without having to coordinate with each other.

Mobile IPv6 (MIPv6) is a protocol developed as a subset of Internet Protocol version 6 (IPv6) to support mobile connections. MIPv6 is an update of the IETF (Internet Engineering Task Force) Mobile IP standard (RFC 2002) designed to authenticate mobile devices (known as mobile nodes) using IPv6 addresses.

The goal of the WiMAX Forum is to produce the standard for network architecture for networks based on the IEEE 802.16 wireless technology.

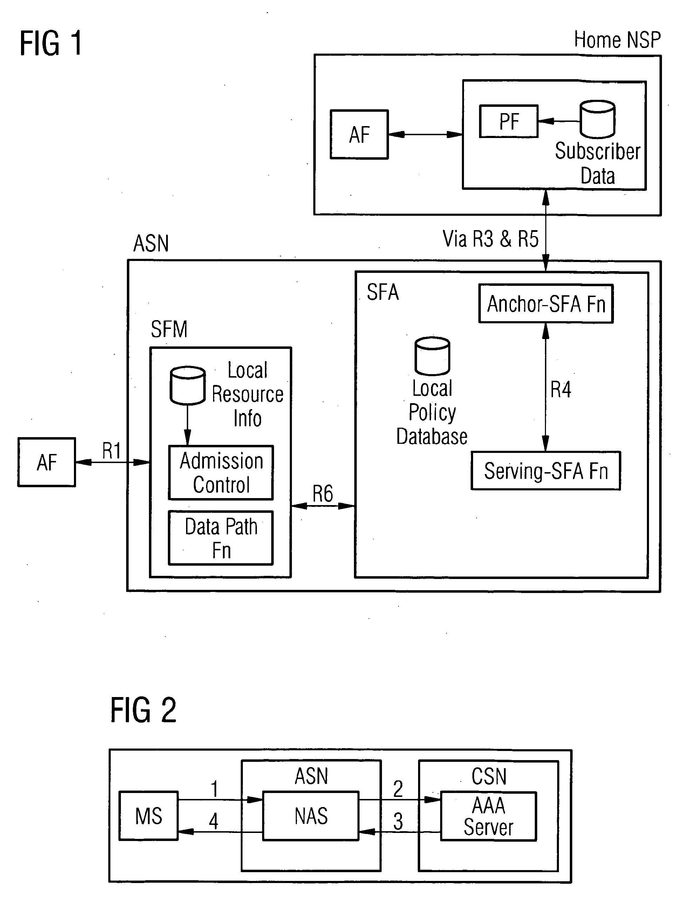

In reference to Fig. 1, the WiMAX network 100 consists of a CSN (WiMAX Connectivity Serving Network) 102, which is comparable to a core network, and the ASN (WiMAX Access Serving Network) 104, which has the role of wireless access network. ASN and CSN could be operated by different business entities (operators).

The home CSN of a WiMAX subscriber contains the policy function (PF) 106, which holds the subscriber subscription information 108 and the corresponding QoS profiles. The PF is also responsible for authorizing the services for the subscriber. The QoS architecture in WiMAX networks is described in WiMAX NWG Stage 2, "WiMAX End-to-End Network System Architecture", December 2005.

When the MS (WiMAX Mobile Station) 110 attaches to the WiMAX network, the ASN performs authentication of the subscriber with the subscriber's home CSN. After the MS is successfully authenticated, the anchor SFA (Service Flow Authorization) function 112 registers itself with the PF in the CSN. At this point the PF will setup the pre-provisioned service flows by sending the appropriate commands to the anchor SFA.

After this time, the application function (AF), located in the CSN, can request a PF to setup an additional data flow with a particular QoS (Quality of Service) characteristic. For example, the SIP application server could request a separate service flow for a VoIP session. The PF will again send the appropriate commands to the anchor SFA function in the ASN.

The problem is that it is not at all clear how the anchor SFA function knows the address of the PF with which it should register.

The problem is further complicated by the fact that subscribers attaching to the ASN could belong to different NSPs (WiMAX Network Service Provider (operator of a CSN)). As a consequence, the anchor SFA function needs to register itself with different PFs located in different CSNs. This is rather inefficient and clumsy.

Presently, the NWG stage 2 text does not specify any methods how the SFA function in the ASN comes into possession of the appropriate PF address.

The only conceivable method at the moment is that the WiMAX Access Network Provider (operator of an ASN) NAP operator manually configures the address of a PF into each anchor SFA. In case that the NAP supports multiple NSPs, anchor SFA must be manually preconfigured with one PF address per NSP. NSP can be identified via the domain part of a subscriber's NAI (Network Access Identifier), which is transmitted as part of subscriber authentication.

Summary & Objects Of The Present Invention.

The present invention solves the foregoing problems in which a PF address is dynamically provided to the CSN by means of claim 1, wherein is disclosed:
A method for dynamically specifying a policy function (PF) used by a Service Flow Authorization (SFA) of an Internet Protocol (IP) network,
comprising:
   - a mobile station (MS) sends a request to a Network Access Server (NAS) (201),
   - Service Equipment forwards the request to a Service Provider's AAA Server (202),
   - a connectivity serving network (CSN) sends an Access-Accept RADIUS message to an access serving network (ASN) (203),
characterised in that, the method comprising the step of:
inserting the PF address into the Access-Accept RADIUS message.

This is advantageous as the SFA anchor is provided the PF address with certainty.
2. The method of claim 1, further comprising the step of forming the Access-Accept message in accordance with RFC2865 requirements.
3. The method of any of the previous claims, further comprising the step of inserting the PF address in binary form.
4. The method of any of the previous claims, further comprising the step of forming a PF-Identifier containing a string representation of the PF address.
5. The method of any of the previous claims, further comprising the step of authenticating the network using DIAMETER.
6. An Internet Protocol network that dynamically specifies a policy function (PF) used by a Service Flow Authorization (SFA) of an Internet Protocol (IP) network,
   comprising:
   - a mobile station (MS) that sends a request to a Network Access Server (NAS) (201),
   - Service Equipment that forwards the request to a Service Provider's AAA Server (202),
   - a connectivity serving network (CSN) that sends an Access-Accept RADIUS message to an access serving network (ASN) (203),
   characterised in that:
   a PF address is inserted into the Access-Accept RADIUS message.
7. The network of claim 6, wherein the Access-Accept message is formed in accordance with RFC2865 requirements.
8. The network of any of claims 6-7, wherein the PF address is in binary form.
9. The network of any of claims 6-8, further comprising a PF-Identifier containing a string representation of the PF address.
10. The network of any of claims 6-9, wherein the network is a WiMAX network.

### Brief Description Of The Drawings

Figure 1 illustrates a typical network of the prior art, and
Figure 2 illustrates a call flow employing the invention.

### Detailed Description Of The Preferred Embodiments

The present invention provides that the CSN dynamically specifies the PF address to be used by the anchor SFA.

Preferably, this dynamic assignment should be provided per user, thereby making it possible that different users belonging to the same NSP are assigned different PFs.

The proposal is to dynamically assign the PF address during the subscriber authentication. The subscriber authentication, as defined by NWG stage 2 text is shown in Figure 2 that shows a Non-Roaming AAA (Authentication, Authorization and Accounting) Framework.

The user (e.g. MS) sends a request to the Service Equipment (e.g. Network Access Server-NAS) in step 201. The Service Equipment forwards the request in step 202 to the Service Provider's AAA Server. Service Provider's AAA server evaluates the request and returns an appropriate response to the Service Equipment.

Service Equipment provisions the bearer plane and notifies the user that it is ready.

The WiMAX networks use RADIUS as the authentication protocol between the ASN and the CSN. In case that the subscriber is successfully authenticated, the CSN will send the Access-Accept RADIUS message to the ASN in step 203.

In step 204 the MS is informed of the successful authentication (EAP is used for authentication, so EAP-Success message is sent to the MS in step 4). After successful authentication, the network provides the MS with the radio channel. The network allocates the necessary radio resources and informs the MS by sending the message DSC-Req (Dynamic Service Change Request).

The proposal is to define a new, vendor specific RADIUS attribute(s) which carries the address of a PF. This attribute(s) is included in Access-Accept RADIUS message.

New vendor-specific RADIUS attribute are in line with the WiMAX Forum. This is made possible as the IETF has allocated an organization number to the WiMAX Forum, such that the WiMAX Forum can define its own vendor-specific attributes.

To introduce this new attribute into protocol specification, first there is provided an appropriate text in a form of WiMAX Forum contribution. Once the new attribute is defined in a protocol specification (as part of WiMAX Forum standard), the vendors will enhance their H-AAA servers with support for this new attribute such that it will be included in the AccessAccept RADIUS message sent by AAA server.

The attribute of this proposal is defined along similar parameters as already existing parameters NAS-Address and NAS-Identifier, as defined in "RFC2865 - Remote Authentication Dial In User Service (RADIUS), C. Rigney, et al., June 2000, Standards Track". The proposed names for the new vendor-specific attributes of this proposal are: PF-Address and PF-Identifier.

PF-Address contains the IP address in binary form, and PF-Identifier contains the string representation of a PF address (for example, FQDN, Fully Qualified Domain Name).

It is probable that in the future also DIAMETER will be allowed as authentication protocol in WiMAX networks. The present proposal is also applicable to such networks. In that case, the same attributes are also defined for DIAMETER.

In case of manual configuration, the NAP operator will have to manually configure the PF address into every anchor SFA. If the NAP operator has business agreements with multiple NSPs, it will need to perform this manual configuration for every NSP. In case of dynamic PF assignment as in the present proposal, the manual configuration is not needed at all, thus saving the administrative effort.

Manual configuration performed by a human operator is error prone. If SFA is configured with an invalid PF address, the result is that subscribers will not be able to use any WiMAX services whatsoever. Dynamic assignment, as described here for the first time, avoids the possibility for such error.

Further, the solution with manual configuration of a PF address in every anchor SFA does not scale well. Since anchor SFA maintains only single PF address per NSP, all subscribers of this NSP will use the same PF. This may bring the PF into overload. In the proposed solution, the NSP can dynamically assign different PFs to different subscribers, thus dividing the load among multiple PFs.

In case of manual configuration of PF address, the maintenance and upgrade of PF is complicated. When the NSP decides to change the address of a PF (because of fail-over scenario, or introduction of software upgrade, or a new hardware box), the NSP operator will have to update all anchor SFAs with the new address. This update must be performed manually (which opens room for human mistakes). Further, an NSP can have multiple associated NAPs (ASN sharing scenario), which means that the PF address will need to be updated in multiple access networks. Since in a WiMAX network the NSP and NAP are different business entities, this will result in complicated procedures between different administrative boundaries. A single NAP can have several dozens (or even several hundreds) of anchor SFAs, and an NSP can have ASN sharing agreements with dozens of NAPs. Thus the total number of SFAs to be updated when the PF address is changed can easily exceed couple of hundreds, which directly translates to a large effort in maintenance. In case of dynamic PD assignment, this dependency between operators doesn't exist.

The proposed introduction of additional, vendor-specific RADIUS attributes is completely in line with the current NWG stage 2 text. For example, the current text introduces already the Home Agent Address (HA@) and Dynamic Host Configuration Protocol (DHCP) Server Address (DHCP@) as new, vendor-specific RADIUS attributes which are used in Access-Accept message.

## Claims

1. A method for dynamically specifying a policy function (PF) used by a Service Flow Authorization (SFA) of an Internet Protocol (IP) network,
comprising:
- a mobile station (MS) sends a request to a Network Access Server (NAS) (201),
- Service Equipment forwards the request to a Service Provider's AAA Server (202),
- a connectivity serving network (CSN) sends an Access-Accept RADIUS message to an access serving network (ASN) (203),
**characterised in that**, the method comprising the step of:
inserting the PF address into the Access-Accept RADIUS message.

2. The method of claim 1, further comprising the step of forming the Access-Accept message in accordance with RFC2865 requirements.

3. The method of any of the previous claims, further comprising the step of inserting the PF address in binary form.

4. The method of any of the previous claims, further comprising the step of forming a PF-Identifier containing a string representation of the PF address.

5. The method of any of the previous claims, further comprising the step of authenticating the network using DIAMETER.

6. An Internet Protocol network that dynamically specifies a policy function (PF) used by a Service Flow Authorization (SFA) of an Internet Protocol (IP) network,
comprising:
- a mobile station (MS) that sends a request to a Network Access Server (NAS) (201),
- Service Equipment that forwards the request to a Service Provider's AAA Server (202),
- a connectivity serving network (CSN) that sends an Access-Accept RADIUS message to an access serving network (ASN) (203),
**characterised in that**:
a PF address is inserted into the Access-Accept RADIUS message.

7. The network of claim 6, wherein the Access-Accept message is formed in accordance with RFC2865 requirements.

8. The network of any of claims 6-7, wherein the PF address is in binary form.

9. The network of any of claims 6-8, further comprising a PF-Identifier containing a string representation of the PF address.

10. The network of any of claims 6-9, wherein the network is a WiMAX network.
